# EUROPEAN PATENT SPECIFICATION

(11) **EP 4 459 187 B1**
(45) Date of publication and mention of the grant of the patent: **08.10.2025**
(21) Application number: 24172973.0
(22) Date of filing: 29.04.2024
(51) Int. Cl.: F23R 3/28

(54) **COMBUSTOR NOZZLE, COMBUSTOR, AND GAS TURBINE INCLUDING SAME**
BRENNKAMMERDÜSE, BRENNKAMMER UND GASTURBINE DAMIT
BUSE DE CHAMBRE DE COMBUSTION, CHAMBRE DE COMBUSTION ET TURBINE À GAZ COMPRENANT CELLE-CI

(30) Priority: 02.05.2023 KR 20230057295
(43) Date of publication of application: 06.11.2024
(73) Proprietor: Doosan Enerbility Co., Ltd., Seongsan-gu Changwon-si, Gyeongsangnam-do 51711 (KR)
(72) Inventor: Shershnyov, Borys, 51632 Changwon-si, Gyeongsangnam-do (KR)
(74) Representative: BCKIP Part mbB

(56) References cited:
- US-A1- 2010 031 662
- US-A1- 2012 192 566
- US-A1- 2013 086 912
- US-A1- 2013 104 551
- US-A1- 2013 318 976
- US-A1- 2017 254 539

## Description

### CROSS REFERENCE TO RELATED APPLICATION

The present application claims priority to Korean Patent Application No. 10-2023-0057295, filed May 2, 2023.

### FIELD OF THE INVENTION

The present invention relates to a combustor nozzle, a combustor, and a gas turbine including the same and, more particularly, to a combustor nozzle using fuel containing hydrogen, a combustor, and a gas turbine including the same.

### BACKGROUND OF THE INVENTION

A gas turbine is a power engine that mixes air compressed by a compressor with fuel for combustion and rotates a turbine with hot gas produced by the combustion. A gas turbine can be used, for example, to drive a generator, an aircraft, a ship, a train, and so on.

Generally, a gas turbine includes a compressor, a combustor, and a turbine. The compressor sucks and compresses outside air, and then transmits the compressed air to the combustor. The air compressed by the compressor becomes high pressure and high temperature. The combustor mixes the compressed air introduced from the compressor with fuel and burns a mixture thereof. Combustion gas produced by the combustion is discharged to the turbine. Turbine blades in the turbine are rotated by the combustion gas, thereby generating power. The generated power is used in various fields, such as generating electric power, actuating machines, and so on.

Fuel is sprayed through nozzles mounted in each combustor, and the nozzles may be configured to spray gas fuel and liquid fuel. Recently, it is recommended to use hydrogen fuel or fuel containing hydrogen so as to inhibit the emission of carbon dioxide.

However, since hydrogen has a high combustion rate, when hydrogen fuel or fuel containing hydrogen is burned in a gas turbine combustor, a flame formed in the gas turbine combustor approaches and heats the structure of the gas turbine combustor, which may cause a problem with the reliability of the gas turbine combustor.

In order to solve this problem, Korean Patent Application Publication No. 10-2020-0027894 proposes a combustor nozzle having multiple tubes. However, since the nozzle having the multiple tubes is not provided with a swirler, there is a problem that it is difficult to uniformly mix fuel and air with each other.

In addition, in a gas turbine that burns hydrogen, it is necessary to efficiently cool a nozzle tip part in order to prevent deterioration of the nozzle tip part.

US 2013 / 0 086 912 A1 discloses a multi-tube fuel nozzle for a combustor of a gas turbine including a multi-tube, a plurality of premixing tubes extending through a chamber defined by the multi-tube, and a fuel tube extending partially within the chamber. The premixing tubes extend to a plate shaped downstream wall portion of the multi-tube to injects an air-fuel mixture via an air-fuel mixture outlet into a combustion region. The fuel tube includes first and second baffles disposed spaced apart from one another. The first and second baffles are disposed about a longitudinal axis of the fuel nozzle . The second baffle is disposed between the first baffle and the downstream wall portion. A spacer is disposed between the downstream wall portion and the second baffle and is configured to maintain a gap between the wall portion and the baffle. The second baffle includes the plurality of impingement cooing orifices. Fuel is enabled to flow through the plurality of impingement orifices in axial direction and impingement cools the downstream wall portion.

### SUMMARY OF THE INVENTION

It is one of the objects of the invention provide a combustor nozzle capable of efficiently cooling a nozzle tip part, a combustor, and a gas turbine including the same. In addition, an object of the invention is to provide a combustor nozzle capable of uniformly mixing fuel and air, a combustor, and a gas turbine including the same.

Additional objects and advantages of the invention will be set forth in part in the description which follows and, in part, will become apparent from the description, or may be learned by practice of the exemplary embodiments.

To this end, the present invention provides a combustor nozzle in accordance with claim 1, a combustor in accordance with claim 12 and a gas turbine in accordance with claim 13. Advantageous embodiments are subject to the dependent claims and to the following description, referring to the drawings.

According to a first aspect of the invention, there is provided a combustor nozzle that burns fuel containing hydrogen, the combustor nozzle including: a plurality of mixing tubes through which air and fuel flow; a multi-tube into which the mixing tubes are inserted, the multi-tube supporting the mixing tubes; a fuel tube formed inside the multi-tube and through which fuel flows; a tip plate coupled to a tip of the multi-tube; a front plate spaced apart from the tip plate, the front plate forming a cooling space; and a dispersion plate spaced apart from the front plate and connected to the fuel tube, the dispersion plate forming a dispersion space in which fuel discharged from the fuel tube is diffused.

Generally, the multi-tube defines an inner space in which the mixing tubes extend. The multi-tube, thus, surrounds the mixing tubes. A central axis of the multi-tube defines a nozzle axial or longitudinal direction. A nozzle radial direction extends transverse to the nozzle axial direction.

According to the invention, the dispersion space is connected to the cooling space such that fuel is enabled to be supplied into the cooling space to cool the tip plate. Thus, a fluid communication is provided between the dispersion space and cooling space, so that fuel is enabled to be supplied from the dispersion space to the cooling space to cool the tip plate, e.g., by being directed towards the tip plate. A connecting structure configured to direct the fuel from the dispersion space into the cooling space and towards the tip plate is provided to connect the dispersion space and the cooling space.

An impact connector is mounted between the front plate and the tip plate, the impact connector connecting the dispersion space and the cooling space to each other, and the impact connector being configured to spray the fuel toward the tip plate such that the fuel impacts the tip plate. The impact connector forms a connecting structure.

A first end portion of the impact connector is fixed to the tip plate, and a second end portion of the impact connector is fixed to the front plate.

The impact connector may include a connection tube coupled to the front plate, a support protrusion that protrudes from the connection tube, and a heat transfer support which protrudes from the support protrusion and which is in contact with the tip plate.

The support protrusion may include a plurality of support protrusions that protrudes from the connection tube, and the plurality of support protrusions may be formed such that the plurality of support protrusions is inclined with respect to a longitudinal direction of the connection tube.

The heat transfer support may be formed in a truncated cone shape such that a diameter, in particular, an outer diameter of the heat transfer support is gradually increased from the support protrusion toward the tip plate.

The support protrusion may be formed in a plate shape, and may be inserted into an inner portion of the connection tube, thereby dividing an inner space of the connection tube.

A recessed portion which is concavely recessed, and which forms a stabilizing space having a cone shape may be formed in a center region, in particular, in a center of the tip plate. The center of the tip plate may coincide with a central axis of the multi-tube and/or may correspond to a center of area of the tip plate.

A plurality of intermediate spray holes through which the fuel is sprayed may be formed at a portion in the fuel tube positioned in the dispersion space.

A tip spray portion which protrudes in a cone shape and which has a plurality of tip spray holes may be formed on a tip of the fuel tube.

A center spray plate which is disposed inclinedly with respect to the front plate and which faces the recessed portion may be formed in a center of the front plate, and a center hole through which the fuel is sprayed may be formed in the center spray plate.

The dispersion plate may be formed such that the dispersion plate is inclined so that the dispersion plate gradually protrudes rearward from a center of the dispersion plate in a radial direction toward an outside thereof. According to some embodiments, the dispersion plate may be formed funnel-shaped, wherein an inner diameter defined by the dispersion pate increases towards the front plate. For example, the funnel-shape may be a cone shape or a curved shape such as, for example, a paraboloid.

According to some embodiments, a first, radially inner end of the dispersion plate may be mounted to the fuel tube, and a second, radially outer end of the dispersion plate may be mounted to an intermediate tube which is fixed to a radially outer end of the front plate.

According to a second aspect of the invention, there is provided a combustor including: a burner having a nozzle that includes a plurality of nozzles configured to spray fuel and air; and a duct assembly which is coupled to a first side of the burner and in which the fuel and the air are burned, the duct assembly being configured to transfer combustion gas to a turbine, wherein the nozzle includes: a plurality of mixing tubes through which air and fuel flow; a multi-tube into which the mixing tubes are inserted, the multi-tube supporting the mixing tubes; a fuel tube formed inside the multi-tube and through which fuel flows; a tip plate coupled to a tip of the multi-tube; a front plate spaced apart from the tip plate, the front plate forming a cooling space; and a dispersion plate spaced apart from the front plate and connected to the fuel tube, the dispersion plate forming a dispersion space in which fuel discharged from the fuel tube is diffused.

An impact connector may be mounted between the front plate and the tip plate, the impact connector connecting the dispersion space and the cooling space to each other, and the impact connector being configured to spray the fuel toward the tip plate such that the fuel impacts the tip plate.

According to a third aspect of the invention, there is provided a gas turbine including: a compressor configured to compress air introduced from outside; a combustor configured to mix fuel with air compressed from the compressor, the combustor being configured to burn a mixture of the fuel and the air; and a turbine that includes a plurality of turbine blades configured to be rotated by combustion gas generated from the combustor, wherein the combustor includes: a burner having a nozzle that includes a plurality of nozzles configured to spray fuel and air; and a duct assembly which is coupled to a first side of the burner and in which the fuel and the air are burned, the duct assembly being configured to transfer the combustion gas to the turbine, and wherein the nozzle includes: a plurality of mixing tubes through which air and fuel flow; a multi-tube into which the mixing tubes are inserted, the multi-tube supporting the mixing tubes; a fuel tube formed inside the multi-tube and through which fuel flows; a tip plate coupled to a tip of the multi-tube; a front plate spaced apart from the tip plate, the front plate forming a cooling space; and a dispersion plate spaced apart from the front plate and connected to the fuel tube, the dispersion plate forming a dispersion space in which fuel discharged from the fuel tube is diffused.

As described above, in the combustor nozzle, the combustor, and the gas turbine according to the invention, since the fuel tube, the dispersion plate, and the front plate are provided, fuel supplied from the fuel tube is dispersed in the dispersion space, so that the fuel, from the front plate, is sprayed to and impacts the tip plate, thereby being capable of efficiently cooling the tip part of the nozzle.

It is to be understood that both the foregoing general description and the following detailed description of exemplary embodiments are exemplary and explanatory and are intended to provide further explanation of the disclosure as claimed.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a view illustrating an interior of a gas turbine according to a first embodiment of the present invention;
FIG. 2 is a view illustrating a combustor in FIG. 1;
FIG. 3 is a perspective view illustrating a nozzle according to the first embodiment of the present invention;
FIG. 4 is a cross-sectional view taken along line IV - IV in FIG. 3;
FIG. 5 is an enlarged view illustrating area A1 in FIG. 4;
FIG. 6 is an enlarged view illustrating area A2 in FIG. 4;
FIG. 7 is a perspective view illustrating an impact connector according to the first embodiment of the present invention;
FIG. 8 is a cross-sectional view illustrating the impact connector according to the first embodiment of the present invention taken along in a longitudinal direction;
FIG. 9 is a perspective view illustrating an interior of a mixing tube according to a second embodiment of the present invention;
FIG. 10 is a perspective view illustrating the impact connector according to a third embodiment of the present invention; and
FIG. 11 is a cross-sectional view illustrating the impact connector according to the third embodiment of the present invention taken along in a longitudinal direction.

### DETAILED DESCRIPTION OF EXEMPLARY EMBODIMENTS OF THE INVENTION

Various modifications and different embodiments will be described below in detail with reference to the accompanying drawings so that those skilled in the art can easily carry out the present invention. It should be understood, however, that the present invention is not intended to be limited to the specific embodiments.

The terminology used herein is for the purpose of describing specific embodiments only and is not intended to limit the scope of the present invention. As used herein, the singular forms "a", "an", and "the" are intended to include the plural forms as well, unless the context clearly indicates otherwise. In the present disclosure, terms such as "comprises", "includes", or "have/has" should be construed as designating that there are such features, integers, steps, operations, components, parts, and/or combinations thereof, not to exclude the presence or possibility of adding of one or more of other features, integers, steps, operations, components, parts, and/or combinations thereof.

Hereinafter, exemplary embodiments will be described below in detail with reference to the accompanying drawings. It should be noted that like reference numerals refer to like parts throughout various drawings and exemplary embodiments. In certain embodiments, a detailed description of functions and configurations well known in the art may be omitted to avoid obscuring appreciation of the present invention by those skilled in the art. For the same reason, some components may be exaggerated, omitted, or schematically illustrated in the accompanying drawings.

Hereinafter, a gas turbine according to a first embodiment of the present invention will be described.

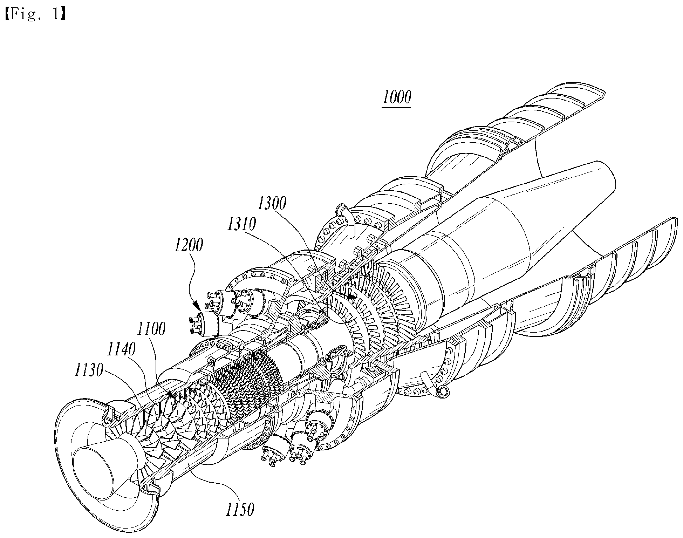

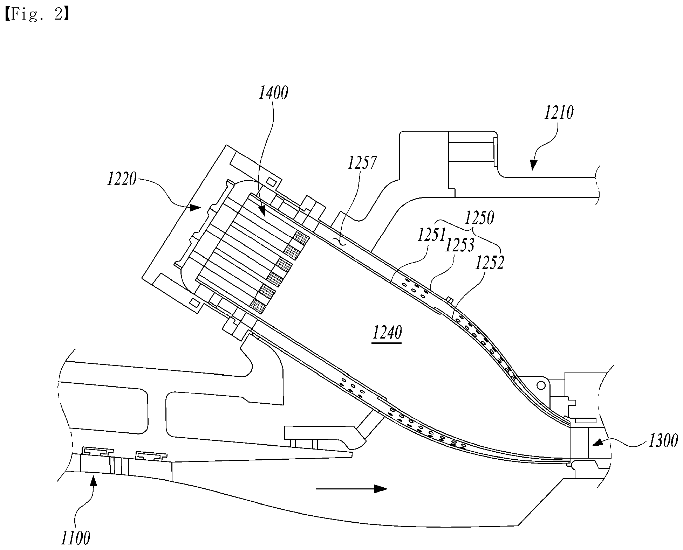

FIG. 1 is a view illustrating an interior of the gas turbine according to the first embodiment of the present invention, and FIG. 2 is a view illustrating a combustor of FIG. 1.

A thermodynamic cycle of a gas turbine 1000 according to the present embodiment may ideally comply with the Brayton cycle. The Brayton cycle may consist of four phases including isentropic compression (adiabatic compression), isobaric heat addition, isentropic expansion (adiabatic expansion), and isobaric heat dissipation. In other words, in the Brayton cycle, thermal energy may be released by combustion of fuel in an isobaric environment after the atmospheric air is sucked and compressed to a high pressure, hot combustion gas may be expanded to be converted into kinetic energy, and exhaust gas with residual energy may then be discharged to the atmosphere. That is, the Brayton cycle may consist of four processes, i.e., compression, heating, expansion, and exhaust.

As illustrated in FIG. 1, the gas turbine 1000 using the Brayton cycle as described above may include a compressor 1100, a combustor 1200, and a turbine 1300. Although the following description is given with reference to FIG. 1, the description of the present invention may be widely applied to a turbine engine having the same configuration as the gas turbine 1000 exemplarily illustrated in FIG. 1.

Referring to FIG. 1, the compressor 1100 of the gas turbine 1000 may suck air from the outside and compress the air. The compressor 1100 may supply the air compressed by compressor blades 1130 to the combustor 1200 and may supply cooling air to a high temperature region required for cooling in the gas turbine 1000. In this case, since the air sucked into the compressor 1100 is subject to an adiabatic compression process in the compressor 1100, the pressure and temperature of the air that has passed through the compressor 1100 increase.

The compressor 1100 may be designed as a centrifugal compressor or an axial compressor. Generally, the centrifugal compressor is applied to a small gas turbine, whereas a multistage axial compressor is applied to the large gas turbine 1000 as illustrated in FIG. 1 because it is necessary to compress a large amount of air. In the multistage axial compressor, the compressor blades 1130 of the compressor 1100 rotate along with a rotation of rotor disks to compress air introduced thereinto while delivering the compressed air to rear-stage compressor vanes 1140. The air is compressed increasingly to a high pressure while passing through the compressor blades 1130 formed in a multistage manner.

A plurality of compressor vanes 1140 may be formed in a multistage manner and mounted inside a housing 1150. The compressor vanes 1140 guide the compressed air that flows from front-stage compressor blades 1130 to rear-stage compressor blades 1130. Optionally, at least some of the plurality of compressor vanes 1140 may be mounted such that at least some of the plurality of compressor vanes 1140 is capable of being rotated within a fixed range for regulating an inflow rate of air and so on.

The compressor 1100 may be driven by using some of a power output from the turbine 1300. To this end, as illustrated in FIG. 1, a rotary shaft of the compressor 1100 and a rotary shaft of the turbine 1300 may be directly connected to each other. In the large gas turbine 1000, almost half of the power that is generated from the turbine 1300 may be consumed for driving the compressor 1100. Therefore, the overall efficiency of the gas turbine 1000 may be enhanced by directly increasing the efficiency of the compressor 1100.

The turbine 1300 may include a plurality of rotor disks 1310, a plurality of turbine blades radially arranged on each of the rotor disks 1310, and a plurality of turbine vanes. Each of the rotor disks 1310 may have a substantially disk shape and a plurality of grooves formed on an outer peripheral portion thereof. The grooves may be formed such that each of the grooves has a curved surface, and the turbine blades and the turbine vanes are inserted into the grooves. The turbine vanes are fixed so as not to rotate and serve to guide a flow direction of combustion gas that has passed through the turbine blades. The turbine blades generate rotational force while being rotated by the combustion gas.

Meanwhile, the combustor 1200 is configured mix fuel with the compressed air that is supplied from an outlet of the compressor 1100 and perform isobaric combustion, thereby being capable of producing combustion gas with high energy. FIG. 2 is a view illustrating an example of a combustor 1200 applied to the gas turbine 1000. The combustor 1200 may include a combustor casing 1210, a burner 1220, a nozzle 1400, and a duct assembly 1250.

The combustor casing 1210 may have a substantially cylindrical shape such that the combustor casing 1210 surrounds a plurality of burners 1220. The burners 1220 may be disposed on a downstream end of the compressor 1100 and may be disposed along the combustor casing 1210 having an annular shape. Each of the burners 1220 includes a plurality of nozzles 1400, and fuel sprayed from the nozzles 1400 is mixed with air at an appropriate rate so that the mixture thereof is suitable for combustion.

The gas turbine 1000 may use gas fuel, especially fuel containing hydrogen. The fuel may be, for example, hydrogen fuel alone or fuel containing hydrogen and natural gas.

Compressed air is supplied to the nozzles 1400, for example, along an outer surface of the duct assembly 1250 that connects an associated one of the burners 1220 to the turbine 1300 so that hot combustion gas flows through the duct assembly 1250. In this process, the duct assembly 1250 heated by the hot combustion gas is properly cooled.

The duct assembly 1250 may include a liner 1251, a transition piece 1252, and a flow sleeve 1253. The duct assembly 1250 has a double structure in which the flow sleeve 1253 surrounds the liner 1251 and the transition piece 1252. The liner 1251 and the transition piece 1252 are cooled by the compressed air permeated into an annular space inside the flow sleeve 1253.

The liner 1251 may be a tubular member and is connected to the burner 1220 of the combustor 1200. A space inside or defined by the liner 1251 forms a combustion chamber 1240. A first end portion of the liner 1251 in a longitudinal direction is coupled to the burner 1220. A second end portion of the liner 1251 in the longitudinal direction may be coupled to the transition piece 1252.

The transition piece 1252 is connected to an inlet of the turbine 1300 and serves to guide hot combustion gas to the turbine 1300. A first end portion of the transition piece 1252 in the longitudinal direction may be coupled to the liner 1251, and a second end portion of the transition piece 1252 in the longitudinal direction may be coupled to the turbine 1300. The flow sleeve 1253 serves to protect the liner 1251 and the transition piece 1252 while preventing high-temperature heat from being directly released to the outside. The present invention is not limited to the specific configuration of the duct assembly 1250 described above. Generally, the duct assembly 1250 may define a combustion chamber 1240 and connect the burner 1220 to the turbine 1300.

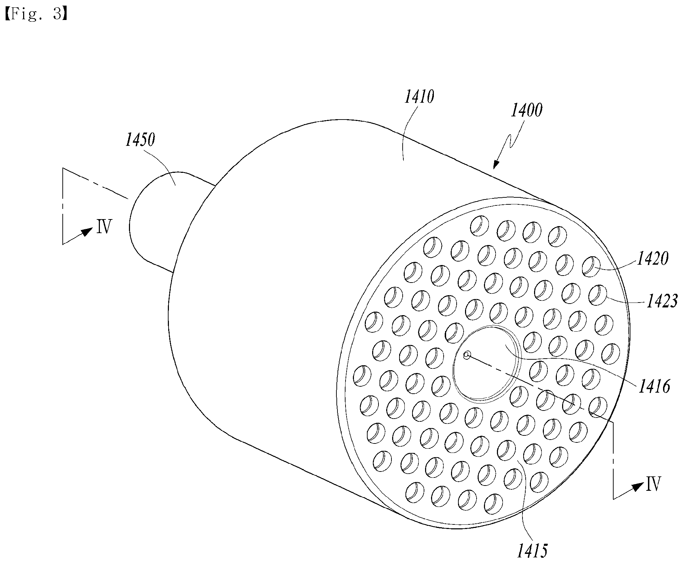

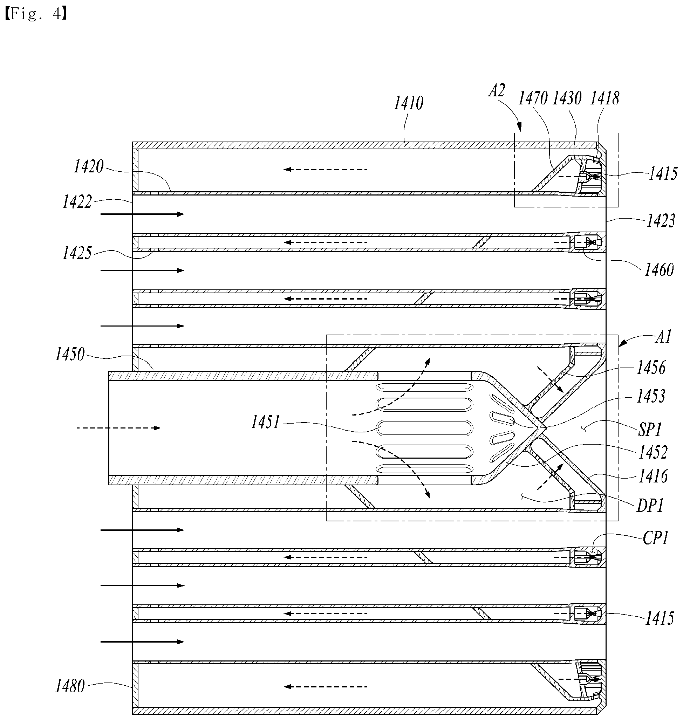

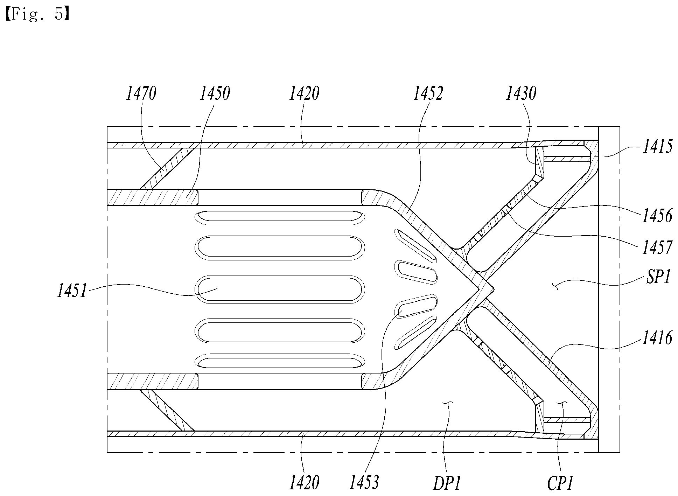

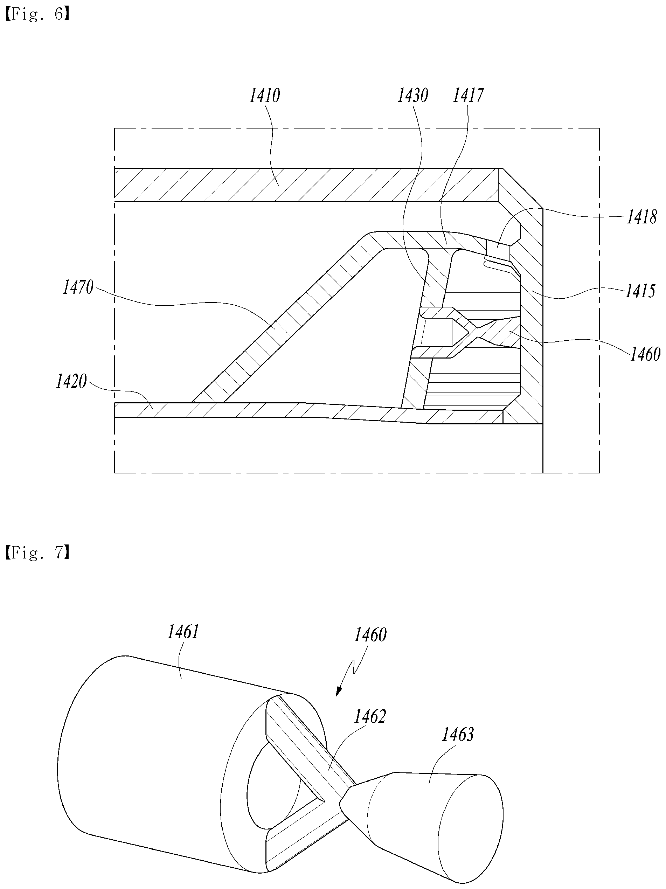

FIG. 3 is a perspective view illustrating the nozzle according to the first embodiment of the present invention, FIG. 4 is a cross-sectional view taken along line IV - IV in FIG. 3, FIG. 5 is an enlarged view illustrating area A1 in FIG. 4, and FIG. 6 is an enlarged view illustrating area A2 in FIG. 4.

Referring to FIGS. 3 to 6, the nozzle 1400 includes a plurality of mixing tubes 1420 through which air and fuel flow, a multi-tube 1410 surrounding the mixing tubes 1420, a fuel tube 1450 formed inside the multi-tube 1410, a tip plate 1415 coupled to a tip of the multi-tube 1410, a front plate 1430 spaced apart from the tip plate 1415, and a dispersion plate 1470 spaced apart from the front plate 1430.

The multi-tube 1410 may be formed in a cylindrical shape, for example. Generally, the multi-tube 1410 has a space formed therein, and a central axis of the multi-tube 1410 may define a nozzle longitudinal or axial direction. A nozzle radial direction extends transverse to the nozzle axial direction. The fuel tube 1450 may be disposed at a center of the multi-tube 1410 in the nozzle radial direction and provides a space through which fuel flows. For example, the fuel may be a gas containing hydrogen. The multi-tube 1410 may be configured to finely spray hydrogen and air. The fuel tube 1450 may protrude rearward (an upstream side) of the multi-tube 1410. That is, the fuel tube 1450 may protrude from a rear end of the multi-tube 1410 lying opposite to the tip of the multi-tube 1410 in the nozzle axial direction, as exemplarily shown in FIG. 4.

The fuel tube 1450 is connected to the dispersion plate 1470 and supplies fuel to a dispersion space DP1. An intermediate spray hole 1451 through which fuel is sprayed into the dispersion hole DP1 is formed in the fuel tube 1450. The intermediate spray hole 1451 is formed in a portion of the fuel tube 1450 located in the dispersion space DP1. As shown in FIG. 4, the intermediate spray hole 1451 may be formed in a circumferential wall of the fuel tube 1450. Optionally, a plurality of intermediate spray holes 1451 may be provided spaced apart from each other in a circumferential direction of the fuel tube 1450, that is, along a circumference of the fuel tube 1450. In addition, the intermediate spray hole 1451 may be formed along a longitudinal direction of the fuel tube 1450. In other words, the intermediate spray hole 1451 may have a longitudinal shape and extend along the longitudinal direction of the fuel tube 1450.

Optionally, the fuel tube 1450 may comprise a tip spray portion 1452. As exemplarily shown in FIG. 4, the tip spray portion 1452 may be formed in an end portion of the fuel tube 1450 facing the tip plate 1415. In particular, the tip spray portion 1452 may be formed on a tip (a tip at a downstream side) of the fuel tube 1450. The tip spray portion 1452 may protrude or extend in a cone shape and include a plurality of tip spray holes 1453. The tip spray portion 1452 is formed in a structure in which an inner diameter is gradually decreased toward the downstream side. In other words, in the tip spray portion 1452, the inner diameter of the fuel tube 1450 gradually decreased toward the tip. The plurality of tip spray holes 1453 may be spaced apart from each other in a circumferential direction of the tip spray portion 1452. The tip spray portion 1452 may connected to a recessed portion 1416 and, optionally, may support the recessed portion 1416.

The tip plate 1415 is coupled to the tip of the multi-tube 1410. The tips of the plurality of the mixing tubes 1420 may be inserted into the tip plate 1415. The front plate 1430 is spaced apart from the tip plate 1415, and a cooling space CP1 may be formed between the front plate 1430 and the tip plate 1415. The front plate 1430 may be fixed to the mixing tubes 1420.

The recessed portion 1416 may be formed in a center of the tip plate 1415. The recessed portion forms a stabilizing space SP1 and may be concavely recessed such that it defines the stabilizing space SP1 in a cone shape, as exemplarily shown in FIG. 5. As the recessed portion 1416 is formed, a flame may be stabilized.

The front plate 1430 is spaced apart from the tip plate 1415 and forms the cooling space CP1.A plurality of impact connectors 1460 are mounted between the front plate 1430 and the tip plate 1415.

In the center of the front plate 1430 in the nozzle radial direction, a center spray plate 1456 disposed obliquely with respect to the front plate 1430 may be formed or arranged. The center spray plate 1456 faces the recessed portion 1416 and may be formed in a substantially cone shape. A center hole 1457 through which fuel is sprayed is formed in the center spray plate 1456, and the fuel sprayed from the center hole 1457 may impact and cool the recessed portion 1416.

As illustrated in FIG. 6, an intermediate tube 1417 may be mounted on a radially outer end of the front plate 1430. The intermediate tube 1417 may be fixed to the radially outer end of the front plate 1430 and to an (radially) outer end of the dispersion plate 1470. A tip of the intermediate tube 1417 may be fixed to the tip plate 1415. A plurality of outer connection holes 1418 for passing fuel may be formed in the intermediate tube 1417.

The dispersion plate 1470 is spaced apart from the front plate 1430 in the nozzle axial direction, e.g., toward the downstream side (rearward), and is connected to the fuel tube 1450 such that the dispersion space DP1, in which fuel discharged from the fuel tube 1450 is diffused, is formed. The dispersion plate 1470 may be formed such that a center portion or radially inner end of the dispersion plate 1470 protrudes further rearward than an outer side or radially outer end thereof. For example, the dispersion plate 1470 may be formed funnel shaped. In particular, the dispersion plate 1470 may be formed obliquely such that the dispersion plate 1470 gradually protrudes rearward as the center portion approaches an inner side thereof from the outer side. The plurality of mixing tubes 1420 may be inserted into the front plate 1430 and the dispersion plate 1470.

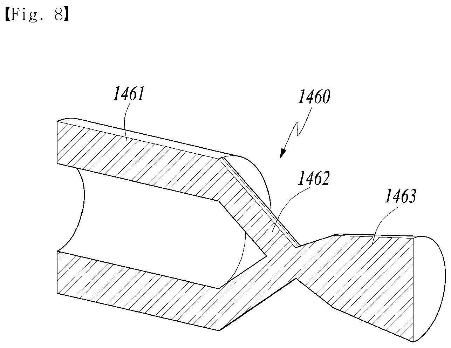

FIG. 7 is a perspective view illustrating an impact connector according to the first embodiment of the present invention, and FIG. 8 is a cross-sectional view illustrating the impact connector according to the first embodiment of the present invention taken along in a longitudinal direction.

Referring to FIGS. 6 to 8, the plurality of impact connectors 1460 supporting the tip plate 1415 are mounted between the front plate 1430 and the tip plate 1415. The impact connectors 1460 connect the front plate 1430 and the tip plate 1415, and pass or guide fuel from the dispersion space DP1 to the cooling space CP1. The fuel accommodated in the dispersion space DP1 may impact and cool the tip plate 1415 while moving to the cooling space CP1 through the impact connector 1460.

A first end portion of the impact connector 1460 is fixed to the tip plate 1415, and a second end portion of the impact connector 1460 is fixed to the front plate 1430. In addition, the impact connector 1460 receives heat from the tip plate 1415 through thermal conduction and is cooled by fuel.

The impact connector 1460 may include a connection tube 1461 coupled to the front plate 1430, a supporting part or supporting protrusion 1462 that protrudes from the connection tube 1461, and a heat transfer part or heat transfer support 1463 which protrudes from the supporting protrusion 1462 and which is in contact with the tip plate 1415. The connection tube 1461, for example, may be formed in a cylindrical shape or may be formed in a structure in which an inner diameter gradually decreases toward the tip plate 1415.

As exemplarily shown in FIG. 7, multiple support protrusions 1462 may be provided. Each support protrusion 1462 protrudes from the connection tube 1461 and is formed obliquely with respect to a longitudinal direction of the connection tube 1461. The support protrusions 1462, for example, may be rod shaped. The plurality of support protrusions 1462 may be inclined from the connection tube 1461 toward a center of the connection tube 1461 in a radial direction of the connection tube 1461. The heat transfer support 1463 may be formed in a truncated cone shape in which a diameter gradually increases from the support protrusion 1462 to the tip plate 1415.

During combustion, heat generated in the tip plate 1415 may be transferred to the support protrusion 1462 and the connection tube 1461 through the heat transfer support 1463, and the heat transfer support 1463 and the support protrusion 1462 may be cooled by fuel being sprayed.

Accordingly, fuel introduced into the dispersion space DP1 through the intermediate spray hole 1451 and the tip spray hole 1453 is dispersed between the dispersion plate 1470 and the front plate 1430, and may impact and cool the tip plate 1415 through the impact connector 1460. Meanwhile, the fuel cooling the tip plate 1415 may be moved rearward (the downstream side with respect to a movement direction of air) through the outer connection hole 1418.

A rear plate 1480 may be coupled to a rear end (an upstream side) of the multi-tube 1410, and the plurality of mixing tubes 1420 is mounted inside the multi-tube 1410 so that several small flames can be formed by using hydrogen gas. The plurality of mixing tubes 1420 may be spaced apart from each other within the multi-tube 1410 and may be formed such that the plurality of mixing tubes 1420 is disposed parallel to each other. The mixing tubes 1420 may be formed in a cylindrical shape, respectively.

A spray port 1423 through which air mixed with fuel is sprayed into the combustor 1200 is formed on a front side or tip end of the mixing tube 1420, and an inlet port 1422 into which air is introduced is formed on a rear side or rear end of the mixing tube 1420. A plurality of fuel spray holes 1425 through which fuel is sprayed may be formed in the mixing tube 1420. Fuel moved rearward through the outer connection hole 1418 is sprayed into the mixing tube 1420 through the fuel spray hole 1425 and may be mixed with air in the mixing tube 1420.

As in the embodiment, when the nozzle 1400 includes the dispersion plate 1470 and the impact connector 1460, fuel and air are uniformly mixed with each other, and components positioned on a front side of the nozzle 1400 are efficiently cooled, so that life and durability of the nozzle 1400 may be increased.

Hereinafter, the nozzle according to a second embodiment of the present invention will be described.

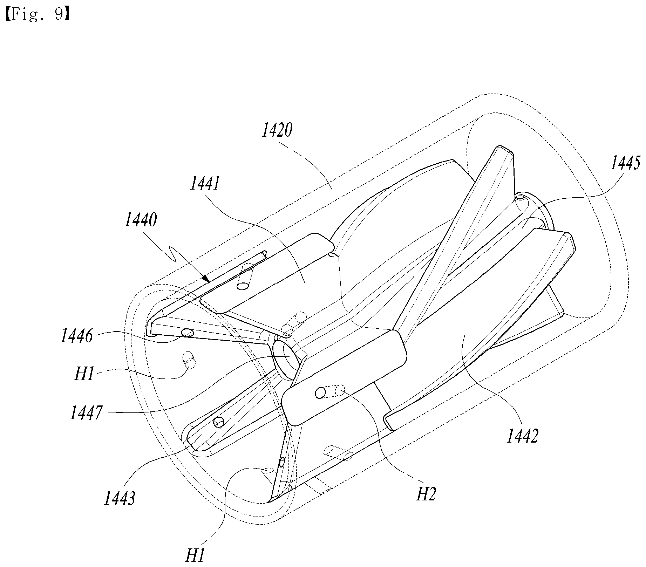

FIG. 9 is a perspective view illustrating an interior of the mixing tube according to the second embodiment of the present invention.

Referring to FIG. 9, since the nozzle according to the present embodiment has the same structure as the nozzle according to the first embodiment, except for the mixing tube 1420, a duplicate description of the same configuration will be omitted.

A mixing guide 1440 through which fuel is sprayed may be mounted inside the mixing tube 1420. The mixing guide 1440 may include a plurality of spray vanes 1441, a center support 1445 disposed at the center of the mixing tube 1420, and swirl vanes 1442 disposed at a downstream side of the spray vanes 1441 or, generally, adjacent to the spray vanes 1441. The swirl vanes 1442 may be connected to the spray vanes 1441 in a spiral direction.

A plurality of first spray holes H1 and a plurality of second spray hole H2 are formed in the mixing tube 1420. The first spray hole H1 is configured to directly spray fuel into the inner space of the mixing tube 1420. The first spray hole H1 may be formed in the circumferential wall of the mixing tube 1420 and may be placed between neighboring spray vanes 1441.

The second spray hole H2 may be formed in the circumferential wall of the mixing tube 1420 and is connected to a vane spray hole 1446 that is formed in the spray vane 1441. is the second spray hole H2, thus, is configured to supply fuel to the vane spray hole 1446 of spray vane 1441. Through the vane spray hole 1446, the fuel may be supplied to the inner space of the mixing tube 1420. An inclined surface 1443 inclined with respect to a radial direction of the mixing tube 1420 is formed on a portion of the spray vane 1441 facing the inlet port 1422, and the vane spray hole 1446 may be formed in the inclined surface 1443. In addition, a space in which fuel is accommodated may be formed inside the spray vane 1441. The vane spray hole 1446 may be configured to spray fuel in a direction opposite to an introduction direction of air. Accordingly, turbulence may be induced, so that fuel and air may be uniformly mixed with each other.

In addition, since the first spray hole H1 is configured to spray fuel from an inner wall of the mixing tube 1420 and the vane spray hole 1446 is configured to spray fuel from an inner side of the mixing tube 1420 in the radial direction, fuel is sprayed at a uniform flow rate in the radial direction of the mixing tube 1420, so that fuel and air may be uniformly mixed with each other in the mixing tube 1420.

The center support 1445 supports the spray vanes 1441 and the swirl vanes 1442 and may be formed in a tubular shape. A central passage 1447 through which air passes may be formed in the center support 1445. The swirl vanes 1442 are connected in the spiral direction and induce a rotational flow, and fuel and air may be uniformly mixed with each other by the rotational flow. The plurality of swirl vanes 1442 is fixed to the center support 1445 and the inner surface of the circumferential wall of the mixing tube 1420.

As in the embodiment, when the mixing guide 1440 is mounted inside the mixing tube 1420, air and fuel may be more uniformly mixed with each other in the mixing tube 1420.

Hereinafter, the nozzle according to a third embodiment of the present invention will be described.

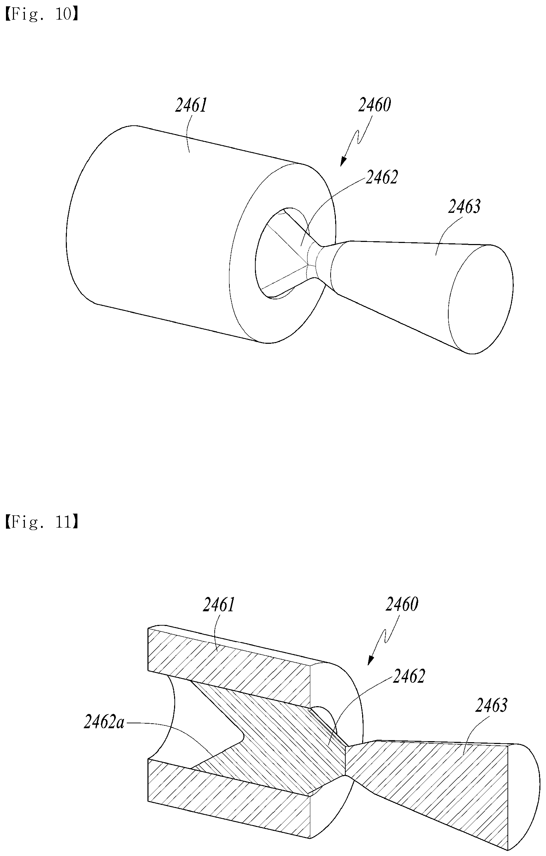

FIG. 10 is a perspective view illustrating the impact connector according to the third embodiment of the present invention, and FIG. 11 is a cross-sectional view illustrating the impact connector according to the third embodiment of the present invention taken along in a longitudinal direction.

The present embodiment will be described with reference to FIG. 10 and FIG. 11. Furthermore, since the nozzle according to the present embodiment has the same structure as the nozzle according to the first embodiment, except for an impact connector 2460, a duplicate description of the same configuration will be omitted.

The impact connector 2460 connects the front plate and the tip plate, and is configured to move or pass fuel from the dispersion space to the cooling space. The fuel accommodated in the dispersion space may cool the tip plate through the impact connector 2460 while being moved to the cooling space.

The impact connector 2460 may include a connection tube 2461 coupled to the front plate 2460, a supporting protrusion 2462 that protrudes from the connection tube 2461, and a heat transfer support 2463 which protrudes from the supporting protrusion 2462 and which is in contact with a tip plate 2415. The connection tube 2461, for example, may be formed in a cylindrical shape, or may be formed in a structure in which an inner diameter gradually decreases toward the tip plate 2415.

As exemplarily shown in FIGS. 10 and 11, the support protrusion 2462 may be formed in a plate shape and may divide a space inside the connection tube 2461 by being inserted into the inside of the connection tube 2461. That is, the support protrusion 2462 may extend into the space inside the connection tube 2461 and may divide the space. The support protrusion 2462 may be formed in a flat plate shape, and a groove 2462a in which a center in a width direction thereof is recessed may be formed in a first end portion of the support protrusion 2462 placed inside the connection tube 2461. The first end portion of the support protrusion 2462 may from an upstream side positioned inside the connection tube 2461. A second end portion of the support protrusion 2462 that protrudes from the connector 2461 may be formed such that a width of the second end portion is gradually decreased with increasing distance from an end of the connection tube 2461. The second end portion of the support protrusion 2462 forms a downstream side. Thus, the width of the second end portion may be gradually decreased toward the downstream side. The heat transfer support 2463 may be formed in a truncated cone shape in which a diameter, in particular, an outer diameter gradually increases from the support protrusion 2462 to the tip plate 2415.

During combustion, heat generated in the tip plate 2415 may be transferred to the support protrusion 2462 and the connection tube 2461 through the heat transfer support 2463, and the heat transfer support 2463 and the support protrusion 2462 may be cooled by fuel being sprayed.

While one or more exemplary embodiments have been described with reference to the accompanying drawings, it will be apparent to those skilled in the art that various variations and modifications may be made by adding, changing, or removing components without departing from the scope of the present invention as defined in the appended claims. In addition, it is noted that any one feature of an embodiment of the present invention described in the specification may be applied to another embodiment of the present invention.

## Claims

1. A nozzle (1400) for a combustor (1200) of a gas turbine (1000) that is configured to burn fuel containing hydrogen, the combustor nozzle (1400) comprising:
a multi-tube (1410) defining an inner space that extends in a nozzle axial direction;
a plurality of mixing tubes (1420) for mixing and passing air and fuel, the mixing tubes (1420) extending within the inner space of the multi-tube (1410) along the nozzle axial direction and being supported by the multi-tube (1410);
a fuel tube (1450) extending at least partially in the inner space of the multi-tube (1410) along the nozzle axial direction, the fuel tube (1450) being provided to supply fuel;
a tip plate (1415) coupled to a tip of the multi-tube (1410);
a front plate (1430) positioned in the inner space of the multi-tube (1410) spaced apart from the tip plate (1415) in the nozzle axial direction, wherein a cooling space (CP1) is formed between the front plate (1430) and the tip plate (1415);
a dispersion plate (1470) positioned in the inner space of the multi-tube (1410) spaced apart from the front plate (1430) and connected to the fuel tube (1450), wherein a dispersion space (DP1), into which fuel discharged from the fuel tube (1450) is diffused, is formed between the dispersion plate (1470) and the front plate (1430); and
an impact connector (1460, 2460) mounted between the front plate (1430) and the tip plate (1415), the impact connector (1460, 2460) connecting the dispersion space (DP1) and the cooling space (CP1) to each other to pass fuel from the dispersion space (DP1) into the cooling space (CP1), and wherein the impact connector (1460, 2460) is configured to spray or guide the fuel toward the tip plate (1415) such that the fuel impacts the tip plate (1415),
**characterized in that** a first end portion of the impact connector (1460, 2460) is fixed to the tip plate (1415), and a second end portion of the impact connector (1460, 2460) is fixed to the front plate (1430).

2. The combustor nozzle (1400) of claim 1, wherein the impact connector (1460, 2460) comprises a connection tube (1461, 2461) coupled to the front plate (1430), a support protrusion (1462, 2462) that protrudes from the connection tube (1461, 2461), and a heat transfer support (1463, 2463) which protrudes from the support protrusion (1462, 2462) and which is in contact with the tip plate (1415).

3. The combustor nozzle (1400) of claim 2, wherein the impact connector (1460) comprises multiple support protrusions (1462) that protrude from the connection tube (1461), wherein the support protrusions (1462) extend inclined with respect to a longitudinal direction of the connection tube (1461).

4. The combustor nozzle (1400) of claim 2, wherein the support protrusion (2462) is formed in a plate shape and is inserted into the connection tube (2461), thereby dividing an inner space of the connection tube (2461).

5. The combustor nozzle (1400) of any one of claims 2 to 4, wherein the heat transfer support (1463, 2463) is formed in a truncated cone shape such that a diameter of the heat transfer support (1463, 2463) is gradually increased from the support protrusion (1462, 2462) toward the tip plate (1415).

6. The combustor nozzle (1400) of any one of the preceding claims, wherein a recessed portion (1416) which is concavely recessed and which forms a stabilizing space (SP1) having a cone shape is formed in a center region of the tip plate (1415).

7. The combustor nozzle (1400) claim 6, wherein a center spray plate (1456) is arranged in a center region of the front plate (1430), and wherein the center spray plate (1456) extends inclined with respect to the front plate (1430) and faces the recessed portion (1416), and a center hole (1457) for spraying fuel from the dispersion space (DP1) towards the recesses portion (1416) is formed in the center spray plate (1456).

8. The combustor nozzle (1400) of any one of the preceding claims, wherein a plurality of intermediate spray holes (1451) is formed at a portion in the fuel tube (1450) positioned in the dispersion space (DP1), so that fuel is enabled to be sprayed into the dispersion space (DP1) through the intermediate spray holes (1451).

9. The combustor nozzle (1400) of any one of the preceding claims, wherein a cone shaped tip spray portion (1452) which has a plurality of tip spray holes (1451) is formed on a tip of the fuel tube (1450).

10. The combustor nozzle (1400) of any one of the preceding claims, wherein the dispersion plate (1470) is formed funnel-shaped, wherein an inner diameter defined by the dispersion pate increases towards the front plate (1430).

11. The combustor nozzle (1400) of claim 10, wherein a first, radially inner end of the dispersion plate (1470) is mounted to the fuel tube (1450), and a second, radially outer end of the dispersion plate (1470) is mounted to an intermediate tube (1417) which is fixed to a radially outer end of the front plate (1430).

12. A combustor for a gas turbine configured to burn fuel containing hydrogen comprising:
a burner (1220) comprising a nozzle (1400) of any one of the preceding claims that is configured to spray fuel and air; and
a duct assembly (1250) which is coupled to a first side of the burner (1220) and which defines a space for burning the fuel with the air, the duct assembly (1250) being configured to transfer combustion gas to a turbine (1300).

13. A gas turbine (1000) comprising:
a compressor (1100) configured to compress air;
a combustor (1200) in accordance with claim 12 configured to mix fuel with air compressed by the compressor (1100) and to burn a mixture of the fuel and the air; and
a turbine (1300) that comprises a plurality of turbine blades configured to be rotated by combustion gas generated from the combustor(1200).

## Patentansprüche

1. Düse (1400) für eine Brennkammer (1200) einer Gasturbine (1000), die dazu eingerichtet ist, wasserstoffhaltigen Brennstoff zu verbrennen, wobei die Brennkammerdüse (1400) umfasst:
ein Multirohr (1410), das einen Innenraum definiert, der sich in einer axialen Richtung der Düse erstreckt;
eine Mehrzahl von Mischrohren (1420) zum Vermischen und Leiten von Luft und Brennstoff, wobei sich die Mischrohre (1420) innerhalb des Innenraums des Multirohrs (1410) entlang der axialen Richtung der Düse erstrecken und von dem Multirohr (1410) gestützt werden;
ein Brennstoffrohr (1450), das sich zumindest teilweise in dem Innenraum des Multirohrs (1410) entlang der axialen Richtung der Düse erstreckt, wobei das Brennstoffrohr (1450) vorgesehen ist, um Brennstoff zuzuführen;
eine Spitzenplatte (1415), die mit einer Spitze des Multirohrs (1410) gekoppelt ist;
eine vordere Platte (1430), die in dem Innenraum des Multirohrs (1410) in axialer Richtung der Düse von der Spitzenplatte (1415) beabstandet positioniert ist, wobei zwischen der vorderen Platte (1430) und der Spitzenplatte (1415) ein Kühlraum (CP1) ausgebildet ist;
eine Dispersionsplatte (1470), die in dem Innenraum des Multirohrs (1410) von der vorderen Platte (1430) beabstandet positioniert und mit dem Brennstoffrohr (1450) verbunden ist, wobei ein Dispersionsraum (DP1), in den aus dem Brennstoffrohr (1450) ausgestoßener Brennstoff diffundiert, zwischen der Dispersionsplatte (1470) und der vorderen Platte (1430) ausgebildet ist; und
einen Prallverbinder (1460, 2460), der zwischen der vorderen Platte (1430) und der Spitzenplatte (1415) montiert ist, wobei der Prallverbinder (1460, 2460) den Dispersionsraum (DP1) und den Kühlraum (CP1) miteinander verbindet, um Brennstoff aus dem Dispersionsraum (DP1) in den Kühlraum (CP1) zu leiten, und wobei der Prallverbinder (1460, 2460) dazu eingerichtet ist, den Brennstoff in Richtung der Spitzenplatte (1415) zu sprühen oder zu führen, so dass der Brennstoff auf die Spitzenplatte (1415) auftrifft,
**dadurch gekennzeichnet, dass**
ein erster Endabschnitt des Prallverbinders (1460, 2460) an der Spitzenplatte (1415) fixiert ist und ein zweiter Endabschnitt des Prallverbinders (1460, 2460) an der vorderen Platte (1430) fixiert ist.

2. Brennkammerdüse (1400) nach Anspruch 1, wobei der Prallverbinder (1460, 2460) ein Verbindungsrohr (1461, 2461), das mit der vorderen Platte (1430) gekoppelt ist, einen Stützvorsprung (1462, 2462), der von dem Verbindungsrohr (1461, 2461) vorsteht, und eine Wärmeübertragungsstütze (1463, 2463), die von dem Stützvorsprung (1462, 2462) vorsteht und die mit der Spitzenplatte (1415) in Kontakt steht, umfasst.

3. Brennkammerdüse (1400) nach Anspruch 2, wobei der Prallverbinder (1460) mehrere Stützvorsprünge (1462) umfasst, die von dem Verbindungsrohr (1461) vorstehen, wobei sich die Stützvorsprünge (1462) in Bezug auf eine Längsrichtung des Verbindungsrohrs (1461) geneigt erstrecken.

4. Brennkammerdüse (1400) nach Anspruch 2, wobei der Stützvorsprung (2462) in Form einer Platte ausgebildet ist und in das Verbindungsrohr (2461) eingesetzt ist, wodurch ein Innenraum des Verbindungsrohrs (2461) unterteilt wird.

5. Brennkammerdüse (1400) nach einem der Ansprüche 2 bis 4, wobei die Wärmeübertragungsstütze (1463, 2463) in Form eines Kegelstumpfes ausgebildet ist, so dass ein Durchmesser der Wärmeübertragungsstütze (1463, 2463) von dem Stützvorsprung (1462, 2462) in Richtung der Spitzenplatte (1415) allmählich zunimmt.

6. Brennkammerdüse (1400) nach einem der vorhergehenden Ansprüche, wobei in einem mittleren Bereich der Spitzenplatte (1415) ein vertiefter Abschnitt (1416) ausgebildet ist, der konkav vertieft ist und der einen stabilisierenden Raum (SP1) in Form eines Kegels ausbildet.

7. Brennkammerdüse (1400) nach Anspruch 6, wobei eine mittlere Sprühplatte (1456) in einem mittleren Bereich der vorderen Platte (1430) angeordnet ist, und wobei sich die mittlere Sprühplatte (1456) in Bezug auf die vordere Platte (1430) geneigt erstreckt und dem vertieften Abschnitt (1416) zugewandt ist, und in der mittleren Sprühplatte (1456) ein mittleres Loch (1457) zum Sprühen von Brennstoff aus dem Dispersionsraum (DP1) in Richtung des vertieften Abschnitts (1416) ausgebildet ist.

8. Brennkammerdüse (1400) nach einem der vorhergehenden Ansprüche, wobei eine Mehrzahl von Zwischensprühlöchern (1451) an einem Abschnitt in dem Brennstoffrohr (1450) ausgebildet ist, der in dem Dispersionsraum (DP1) positioniert ist, so dass Brennstoff durch die Zwischensprühlöcher (1451) in den Dispersionsraum (DP1) gesprüht werden kann.

9. Brennkammerdüse (1400) nach einem der vorhergehenden Ansprüche, wobei ein kegelförmiger Spitzensprühabschnitt (1452), der eine Mehrzahl von Spitzensprühlöchern (1451) aufweist, an einer Spitze des Brennstoffrohrs (1450) ausgebildet ist.

10. Brennkammerdüse (1400) nach einem der vorhergehenden Ansprüche, wobei die Dispersionsplatte (1470) trichterförmig ausgebildet ist, wobei ein durch die Dispersionsplatte definierter Innendurchmesser in Richtung der vorderen Platte (1430) zunimmt.

11. Brennkammerdüse (1400) nach Anspruch 10, wobei ein erstes, radial inneres Ende der Dispersionsplatte (1470) an dem Brennstoffrohr (1450) montiert ist und ein zweites, radial äußeres Ende der Dispersionsplatte (1470) an einem Zwischenrohr (1417) montiert ist, das an einem radial äußeren Ende der vorderen Platte (1430) fixiert ist.

12. Brennkammer für eine Gasturbine, die dazu eingerichtet ist,
wasserstoffhaltigen Brennstoff zu verbrennen, umfassend:
einen Brenner (1220), der eine Düse (1400) nach einem der vorhergehenden Ansprüche umfasst, die dazu eingerichtet ist, Brennstoff und Luft zu sprühen; und
eine Kanalanordnung (1250), die mit einer ersten Seite des Brenners (1220) gekoppelt ist und die einen Raum zum Verbrennen des Brennstoffs mit der Luft definiert, wobei die Kanalanordnung (1250) dazu eingerichtet ist,
Verbrennungsgas an eine Turbine (1300) zu übertragen.

13. Gasturbine (1000), umfassend:
einen Kompressor (1100), der dazu eingerichtet ist, Luft zu komprimieren;
eine Brennkammer (1200) gemäß Anspruch 12, die dazu eingerichtet ist, Brennstoff mit von dem Kompressor (1100) komprimierter Luft zu vermischen und ein Gemisch aus dem Brennstoff und der Luft zu verbrennen; und
eine Turbine (1300), die eine Mehrzahl von Turbinenschaufeln umfasst, die dazu eingerichtet sind, durch von der Brennkammer (1200) erzeugtes Verbrennungsgas angetrieben zu werden.

## Revendications

1. Buse (1400) pour une chambre de combustion (1200) d'une turbine à gaz (1000) prévue pour brûler un combustible contenant de l'hydrogène, ladite buse de chambre de combustion (1400) comprenant :
un canon multitube (1410) définissant un espace intérieur s'étendant dans la direction axiale de la buse ;
une pluralité de tubes de mélange (1420) pour mélanger et refouler de l'air et du carburant, lesdits tubes de mélange (1420) s'étendant dans l'espace intérieur du canon multitube (1410) dans la direction axiale de la buse et étant supportés par le canon multitube (1410) ;
un tube de carburant (1450) s'étendant au moins partiellement dans l'espace intérieur du canon multitube (1410) dans la direction axiale de la buse, ledit tube de carburant (1450) étant prévu pour refouler du carburant ;
une plaque d'extrémité (1415) raccordée à une extrémité du canon multitube (1410) ;
une plaque avant (1430) disposée dans l'espace intérieur du canon multitube (1410), espacée de la plaque d'extrémité (1415) dans la direction axiale de la buse, un espace de refroidissement (CPl) étant formé entre la plaque avant (1430) et la plaque d'extrémité (1415) ;
une plaque de dispersion (1470) disposée dans l'espace intérieur du canon multitube (1410),
espacée de la plaque avant (1430) et reliée au tube de carburant (1450), un espace de dispersion (DPl), où le carburant refoulé par le tube de carburant (1450) est diffusé, étant formé entre la plaque de dispersion (1470) et la plaque avant (1430) ; et
un connecteur d'incidence (1460, 2460) monté entre la plaque avant (1430) et la plaque d'extrémité (1415), ledit connecteur d'incidence (1460, 2460) reliant l'espace de dispersion (DPl) et l'espace de refroidissement (CPl) l'un à l'autre pour la circulation du carburant de l'espace de dispersion (DPl) dans l'espace de refroidissement (CPl), et ledit connecteur d'incidence (1460, 2460) étant prévu pour injecter ou guider le carburant vers la plaque d'extrémité (1415) de sorte que le carburant vienne en contact avec la plaque d'extrémité (1415),
**caractérisé en ce qu'**une première partie d'extrémité du connecteur d'incidence (1460, 2460) est fixée à la plaque d'extrémité (1415), et une deuxième partie d'extrémité du connecteur d'incidence (1460, 2460) est fixée à la plaque avant (1430).

2. Buse de chambre de combustion (1400) selon la revendication 1, où le connecteur d'incidence (1460, 2460) comprend un tube de connexion (1461, 2461) raccordé à la plaque avant (1430), une saillie de support (1462, 2462) formée sur le tube de connexion (1461, 2461), et un support de transfert de chaleur (1463, 2463) s'étendant depuis la saillie de support (1462, 2462) et en contact avec la plaque d'extrémité (1415).

3. Buse de chambre de combustion (1400) selon la revendication 2, où le connecteur d'incidence (1460) comprend plusieurs saillies de support (1462) formées sur le tube de connexion (1461), lesdites saillies de support (1462) s'étendant en inclinaison par rapport à la direction longitudinale du tube de connexion (1461).

4. Buse de chambre de combustion (1400) selon la revendication 2, où la saillie de support (2462) est en forme de plaque et est insérée dans le tube de connexion (2461), divisant ainsi l'espace intérieur du tube de connexion (2461).

5. Buse de chambre de combustion (1400) selon l'une des revendications 2 à 4, où le support de transfert de chaleur (1463, 2463) est de forme tronconique, de sorte que le diamètre du support de transfert de chaleur (1463, 2463) augmente progressivement depuis la saillie de support (1462, 2462) vers la plaque d'extrémité (1415).

6. Buse de chambre de combustion (1400) selon l'une des revendications précédentes, où une partie en retrait (1416) concave et formant un espace de stabilisation (SPl) de forme conique est formée dans une zone centrale de la plaque d'extrémité (1415).

7. Buse de chambre de combustion (1400) selon la revendication 6, où une plaque d'injection centrale (1456) est disposée dans une zone centrale de la plaque avant (1430), et où ladite plaque d'injection centrale (1456) s'étend en inclinaison par rapport à la plaque avant (1430), et fait face à la partie en retrait (1416), et où un trou central (1457) pour injecter le carburant de l'espace de dispersion (DPl) vers la partie en retrait (1416) est formé dans la plaque d'injection centrale (1456).

8. Buse de chambre de combustion (1400) selon l'une des revendications précédentes, où une pluralité de trous d'injection intermédiaires (1451) est formée sur une partie du tube de carburant (1450) disposée dans l'espace de dispersion (DPl), de sorte que le carburant peut être injecté dans l'espace de dispersion (DPl) par les trous d'injection intermédiaires (1451).

9. Buse de chambre de combustion (1400) selon l'une des revendications précédentes, où une partie d'injection d'extrémité en forme de cône (1452) ayant une pluralité de trous d'injection d'extrémité (1451) est formée à une extrémité du tube de carburant (1450).

10. Buse de chambre de combustion (1400) selon l'une des revendications précédentes, où la plaque de dispersion (1470) est en forme d'entonnoir, un diamètre intérieur défini par la plaque de dispersion augmentant dans la direction de la plaque avant (1430).

11. Buse de chambre de combustion (1400) selon la revendication 10, où une première extrémité radialement intérieure de la plaque de dispersion (1470) est montée sur le tube de carburant (1450), et une deuxième extrémité radialement extérieure de la plaque de dispersion (1470) est montée sur un tube intermédiaire (1417) fixé à une extrémité radialement extérieure de la plaque avant (1430).

12. Chambre de combustion pour une turbine à gaz, prévue pour brûler un combustible contenant de l'hydrogène, comprenant :
un brûleur (1220) comprenant une buse (1400) selon l'une des revendications précédentes, prévue pour injecter du combustible et de l'air ; et
un ensemble de conduit (1250) raccordé à un premier côté du brûleur (1220) et définissant un espace pour brûler le combustible avec l'air, ledit ensemble de conduit (1250) étant prévu pour transférer les gaz de combustion vers une turbine (1300).

13. Turbine à gaz (1000), comprenant :
un compresseur (1100) prévu pour comprimer de l'air ;
une chambre de combustion (1200) selon la revendication 12, prévue pour mélanger du carburant avec de l'air comprimé par le compresseur (1100) et pour brûler un mélange de carburant et d'air ; et
une turbine (1300) comprenant une pluralité d'aubes de turbine prévues pour être entraînées en rotation par les gaz de combustion générés par le brûleur (1200).
